# FASCICULE DE BREVET EUROPEEN

(11) **EP 1 937 586 B1**
(45) Date de publication et mention de la délivrance du brevet: **11.11.2015**
(21) Numéro de dépôt: 06808126.4
(22) Date de dépôt: 13.09.2006
(51) Int. Cl.: B67D 3/00, F16K 1/00, F16K 21/00, F16K 35/00, G01F 5/00, G01F 11/12, B65B 3/26

(54) **VANNE DE DOSAGE COMPRENANT UN CONDUIT INTERNE FIXE ET UN MANCHON EXTERNE MOBILE**
DOSIERVENTIL MIT INNERER FESTER LEITUNG UND EXTERNEM BEWEGLICHEM SCHLAUCH
METERING VALVE COMPRISING A FIXED INNER CONDUIT AND A MOBILE OUTER SLEEVE

(30) Priorité: 13.09.2005 FR 0509345; 23.06.2006 FR 0605621
(43) Date de publication de la demande: 02.07.2008
(73) Titulaire: Lesaffre et Compagnie, 75001 Paris (FR)
(72) Inventeur: BLOMME, Karel, B-9440 Evergem (BE)
(74) Mandataire: Cabinet Plasseraud
(86) Numéro de dépôt international: PCT/FR2006/002100
(87) Numéro de publication internationale: WO 2007/031647

(56) Documents cités:
- DE-C- 299 297
- FR-A- 2 677 007
- GB-A- 1 379 736
- GB-A- 2 046 709
- NL-C- 4 872
- US-A- 5 857 596

## Description

L'invention a trait aux vannes de dosage des produits liquides (plus ou moins visqueux), ou pulvérulents dont certains peuvent, en effet, présenter en écoulement un comportement dynamique similaire aux liquides.

Le dosage de tels produits apparaît nécessaire dans bien des domaines. En l'occurrence, la demanderesse s'est trouvée confrontée, dans le domaine de la boulangerie, au problème du dosage de la levure sous forme liquide. Bien qu'il s'agisse du domaine préféré d'application de la présente invention, celle-ci ne saurait être limitée à ce domaine.

Plus particulièrement, le produit à doser peut être une crème de levure plus ou moins épaisse, cette crème pouvant notamment être stable ou stabilisée, fraîche, par exemple pour une utilisation en boulangerie (la teneur en matières sèches étant par exemple comprise entre 12 et 25%). Il peut également s'agir de levain sous forme liquide, de crème de levain liquide (relativement visqueux), d'un améliorant de panification sous forme liquide ou en poudre après remise en suspension. Des combinaisons de tels produits sont également envisageables : il peut ainsi s'agir d'une crème de levure incorporant un ou plusieurs améliorants de panification, tels que des préparations enzymatiques, des émulsifiants, etc.

Des produits de ce type sont présentés de manière détaillée dans la demande internationale publiée sous le numéro WO 2004/048253 et dans le brevet européen EP0792930B1 , et auxquels on pourra se référer. Une vanne de dosage est aussi connue du document NL 4872.

S'agissant des produits pulvérulents, il peut s'agir d'un produit sec comprenant des particules fines, de type levure sèche (comprenant 90 à 95% de matières sèches), ou un améliorant de panification en poudre dont la fluidité est suffisante pour permettre une distribution par vanne.

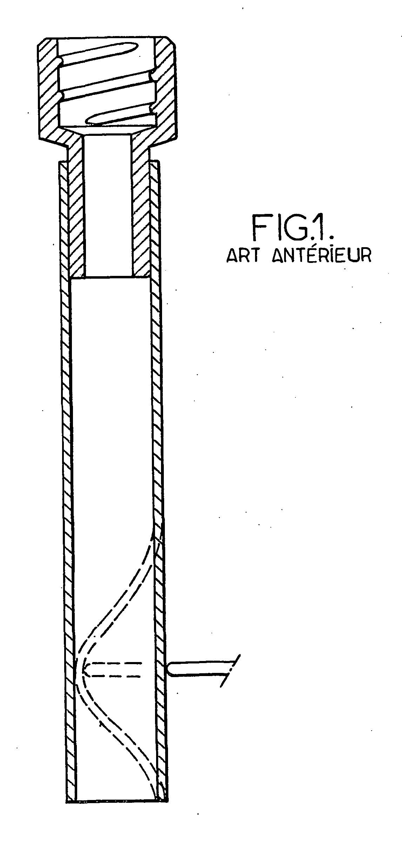

Une vanne de dosage, d'un type connu, actuellement utilisée par la demanderesse, est représentée sur la figure 1 sur laquelle est portée la mention « ART ANTERIEUR ». Cette vanne, intégrée à un dispositif conforme à la demande internationale précitée WO 2004/048253, comprend à une extrémité supérieure un embout pour son raccordement à une tubulure d'amenée du liquide (montée sur un bag in box lui-même stocké dans un compartiment réfrigéré d'une machine de distribution de crème de levure), cet embout étant emmanché dans un flexible tubulaire, couramment réalisé en silicone, dont une extrémité inférieure est susceptible d'être pincée, de manière élastique, par un doigt déplaçable en translation entre une position de libération (en trait continu) dans laquelle il laisse ouvert le flexible pour permettre l'écoulement du liquide, et une position d'obturation (en pointillés) dans laquelle il est élastiquement rappelé pour pincer le flexible et ainsi empêcher l'écoulement.

Cette vanne a fait ses preuves, et a l'avantage de la simplicité de conception. Néanmoins, on a constaté, sous l'action du frottement et du pincement exercés par le doigt de dosage, une usure prématurée - pouvant aboutir à une perforation - du flexible.

En outre, il a également été constaté qu'une partie du produit adhère à la paroi interne du flexible au-dessous de la zone de pincement, pour former un dépôt qui, en premier lieu, affecte l'hygiène générale de la vanne (non seulement en favorisant le développement bactérien, mais également en attirant les insectes), et en second lieu provoque le jaunissement du flexible (au détriment de l'aspect esthétique), lequel doit être remplacé trop fréquemment.

L'invention vise notamment à remédier à ces problèmes, en proposant entre autres objets une vanne de dosage d'un type nouveau, qui présente, entre autres, des qualités accrues d'étanchéité, d'hygiène et de durabilité.

A cet effet, suivant un premier objet, l'invention propose une vanne de dosage d'un produit liquide ou pulvérulent selon la revendication 1.

En position fermée du manchon, l'écoulement du produit se trouve interdit. Le contact intime entre l'obturateur et le siège de soupape permet d'éviter les fuites et garantit ainsi une bonne étanchéité de la vanne, et des bonnes conditions d'hygiène.

Suivant un mode particulier de réalisation, le siège de soupape est tronconique, tandis que l'obturateur est par exemple de forme hémisphérique (il peut également être conique ou tronconique) ; cet obturateur peut être réalisé dans un matériau élastomère (de préférence de type alimentaire). Cet obturateur peut également comprendre un joint d'étanchéité torique positionné dans une rainure périphérique de l'obturateur. Un tel obturateur est avantageux notamment en ce qu'il procure une meilleure étanchéité au produit à doser sous pression.

Par ailleurs, un ressort de rappel est de préférence prévu, pour solliciter en permanence le manchon vers sa position fermée.

Suivant un mode de réalisation, la chambre est délimitée par le siège de soupape d'une part, et par une bague d'étanchéité d'autre part, interposée entre le conduit et le manchon.

Un mécanisme à baïonnette peut en outre être prévu, pour assurer le blocage du manchon en position ouverte et/ou fermée ; ce mécanisme à baïonnette comprend par exemple un téton qui coopère avec une rainure coudée.

Suivant un deuxième objet, l'invention propose un dispositif de dosage d'un produit liquide ou pulvérulent, qui comprend une vanne du type décrite ci-dessus, et des moyens d'actionnement de cette vanne.

Ces moyens d'actionnement de la vanne comprennent par exemple une platine fixe, qui peut être munie de moyens de positionnement de la vanne, et un levier d'actionnement, monté articulé sur la platine et qui coopère avec le manchon pour en commander le déplacement par rapport au conduit.

Suivant un mode de réalisation, le levier présente une échancrure évasée permettant l'introduction du conduit pour assurer le positionnement de l'embout par rapport à la platine. Le levier est de préférence conçu pour pouvoir adopter une position dite hors service dans laquelle il est écarté du manchon.

Suivant un troisième objet, l'invention propose une machine de distribution d'un produit liquide ou pulvérulent, qui comprend :
- un meuble muni d'un compartiment,
- un réservoir interchangeable, disposé dans ledit compartiment et contenant ledit produit, ce réservoir étant muni d'une tubulure pour l'écoulement du produit, et
- un dispositif de dosage tel que décrit ci-dessus, machine dans laquelle la vanne est branchée sur ledit réservoir, son conduit étant raccordé à la tubulure par l'intermédiaire de son embout, tandis que les moyens d'actionnement sont montés sur le meuble.

Suivant un quatrième objet, l'invention propose une machine de distribution d'un produit liquide ou pulvérulent, qui comprend :
- un meuble muni d'un compartiment et ayant une échancrure pour l'introduction de la vanne,
- un réservoir interchangeable, disposé dans ledit compartiment et contenant ledit produit, ce réservoir étant muni d'une tubulure pour l'écoulement du produit, et
- un dispositif de dosage selon le mode de réalisation décrit ci-dessus,
machine dans laquelle la platine est montée sur le meuble au voisinage de l'échancrure, et dans laquelle la vanne est mise en place sur le meuble en étant positionnée dans l'échancrure et branchée sur ledit réservoir, son conduit étant raccordé à la tubulure par l'intermédiaire de son embout.

Suivant un cinquième objet, l'invention propose une installation de distribution d'un produit liquide qui comporte :
- un conteneur contenant ledit produit liquide ;
- des moyens de distribution d'un produit liquide reliant le conteneur à la vanne de dosage présentant les caractéristiques telles que précédemment mentionnées

- une pompe permettant le prélèvement du produit liquide du conteneur et la circulation dudit produit liquide dans les moyens de distribution de produit liquide ;
- un dispositif de dosage avec les caractéristiques précédemment décrites.

Selon un mode préférentiel de réalisation, et afin de permettre la formation d'une boucle de circulation du produit liquide, les moyens de distribution de produit liquide comprennent un conduit retour partant en amont de la vanne de dosage et débouchant soit dans le conteneur, soit dans un conduit secondaire.

Selon un mode préférentiel de réalisation, et afin de permettre le nettoyage des conduits dans lesquels circule le produit liquide, l'installation comprend un réservoir d'une solution de nettoyage apte à nettoyer les moyens de distribution du produit liquide.

Selon un mode préférentiel de réalisation, et afin de permettre la formation d'une boucle de nettoyage traversant la vanne de dosage, l'installation comprend un tuyau de raccordement flexible apte à être raccordé sur la vanne.

Selon un mode préférentiel de réalisation, le tuyau de raccordement flexible débouche soit dans le réservoir de solution de nettoyage, soit dans un point de raccordement prévu sur le conduit retour, soit dans un conduit débouchant dans le réservoir de solution de nettoyage. Une installation avantageuse selon l'invention peut comprendre une ou plusieurs de ces formes de réalisation préférentielles à savoir le conduit retour du produit liquide à doser, un réservoir de solution de nettoyage et/ou le tuyau de raccordement flexible.

Une installation selon l'invention peut en outre comprendre un ou plusieurs dispositifs de dosage parallèles, avec ou sans boucle de nettoyage, et avec ou sans boucle de retour de produit liquide dans le conteneur.

Une installation comprenant plusieurs dispositifs de dosage, une boucle de nettoyage nettoyant les vannes en série et une boucle de retour de produit liquide dans le conteneur est particulièrement avantageuse en ce qu'elle permet un même débit de nettoyage dans toute l'installation.

De manière avantageuse, le conduit secondaire débouche dans le réservoir de solution de nettoyage.

L'invention a également pour objet un procédé pour le dosage de la crème de levure liquide de boulangerie selon la revendication 21.

D'autres objets et avantages de l'invention apparaîtront à la lumière de la description faite ci-après en référence aux dessins annexés dans lesquels :
- la figure 1 est une vue d'élévation en coupe montrant une vanne de dosage selon l'art antérieur ;
- la figure 2 est une vue en perspective montrant un dispositif de dosage selon l'invention ;
- la figure 3 est une vue d'élévation en coupe montrant le dispositif de dosage de la figure 2 avec la vanne de dosage en position fermée et, représentée plus schématiquement, décalée sur la droite, la vanne en position ouverte ;
- la figure 4 est une vue d'élévation partielle en coupe montrant de manière plus précise la partie inférieure de la vanne de la figure 3 ;
- la figure 5 est une vue analogue à la figure 4, suivant une variante de réalisation ;
- la figure 6 est une vue analogue aux figures 4 et 5, suivant une autre variante de réalisation ;
- la figure 7 est une vue d'élévation en coupe montrant une machine de distribution d'un produit liquide ou pulvérulent, conforme à l'invention, intégrant une vanne de dosage dudit produit ;
- la figure 8 est une vue de détail en perspective, de dessus, d'un dispositif de dosage intégrant une vanne de dosage telle que représentée sur la figure 2 notamment, et équipant une machine de distribution telle que représentée sur la figure 7 ;
- la figure 9 est une vue de détail en perspective, de dessous, du dispositif de dosage de la figure 8 monté sur la machine de distribution ;
- la figure 10 est une vue schématique en coupe frontale montrant une installation de distribution d'un produit liquide intégrant une vanne de dosage du produit selon l'invention;
- la figure 11 est une vue schématique d'un mode de réalisation alternatif d'une installation de distribution de produit liquide intégrant une vanne de dosage selon l'invention ;
- la figure 12 est une vue schématique simplifiée d'une installation de distribution de produit intégrant une vanne de dosage selon l'invention et telle qu'illustrée à la figure 11 ;
- la figure 13 est une vue schématique d'un mode de réalisation alternatif d'une installation de distribution de produit liquide intégrant une vanne de dosage selon l'invention ;
- la figure 14 est une vue schématique simplifiée d'une installation de distribution de produit intégrant une vanne de dosage selon l'invention et telle que décrite dans la figure 13 ;
- la figure 15 est une représentation schématique des débits dans la boucle de circulation de produit de l'installation telle qu'illustrée à la figure 13
- la figure 16 est une vue en perspective schématique.d'une forme de réalisation alternative d'une vanne selon l'invention, et
- La figure 17 est une vue en coupe schématique d'une forme de réalisation des moyens d'arrivée de produit liquide dans la vanne intégrée à une installation telle que décrite à la figure 13.

Sur les figures est représentée une vanne de dosage 1, particulièrement adaptée pour la distribution d'un produit liquide, de préférence une levure liquide, telle qu'une crème de levure, mais qui convient également pour la distribution d'un produit pulvérulent (par exemple de la levure ou du levain sous forme sèche, etc.).

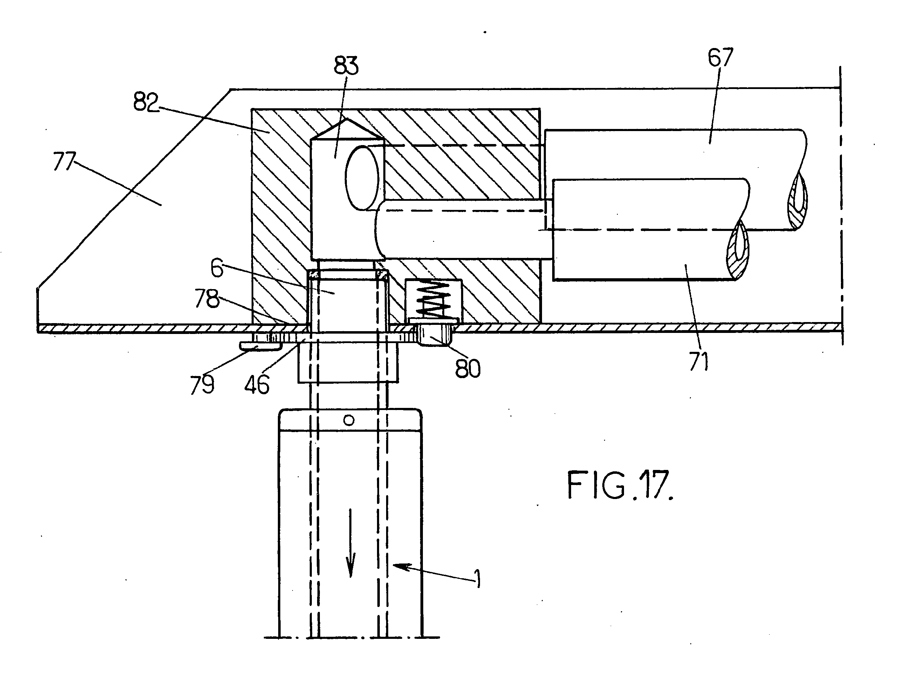

Cette vanne 1 forme la première partie d'un dispositif de dosage 2 dont l'autre partie, ayant pour fonction l'actionnement de la vanne 1, sera décrite plus en détail ci-après. Ce dispositif est destiné par exemple à être monté sur un bâti 3 d'une machine 4 de distribution du produit à doser, machine 4 qui sera également décrite plus en détail ci-après. Alternativement, ce dispositif peut également être monté sur la surface inférieure d'un bras support 77 d'une installation de dosage également décrite ci-après plus en détails en figure 17.

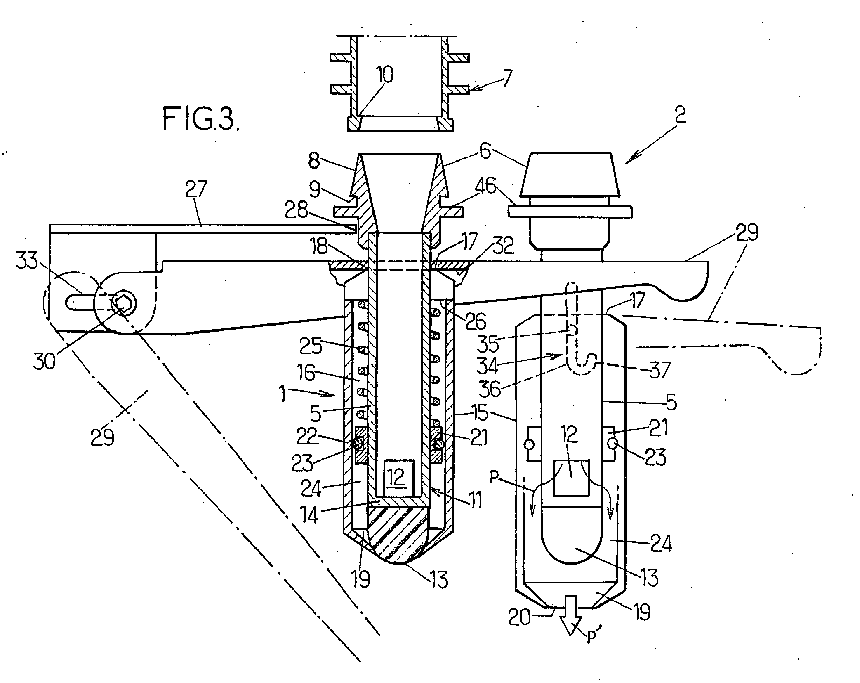

La vanne 1 comprend en premier lieu un conduit 5 tubulaire d'alimentation du produit, fixe par rapport au bâti 3. Ce conduit 5 présente une extrémité supérieure 6, conformée en embout (soit d'un seul tenant, soit rapporté comme cela est représenté sur la figure 3) pour son raccordement à une tubulure 7, souple de préférence, d'amenée du produit. Ce raccordement peut être réalisé par vissage ou par emmanchement à force de l'embout 6. Toutefois, suivant un mode de réalisation préféré illustré sur la figure 3, ce raccordement est réalisé par encliquetage, l'embout 6 présentant une partie conique 8 définissant un épaulement 9 qui vient en prise avec un lamage 10 complémentaire réalisé à une extrémité inférieure de la tubulure 7 d'amenée du produit. Suivant un mode alternatif de réalisation illustré à la figure 17, ce raccordement est réalisé par enfoncement et fixation de l'embout 6 dans l'orifice 78 du bras support 77 tel que cela sera décrit en figure 17.

Le conduit 5 présente par ailleurs une extrémité inférieure 11 de distribution du produit, opposée à l'extrémité supérieure 6, et du côté de laquelle le conduit 5 définit au moins une ouverture 12, constituée d'une découpe latérale, pour le passage du liquide (comme représenté par les flèches P de la figure 3). Suivant un mode de réalisation préféré, deux ouvertures 12 diamétralement opposées sont réalisées dans le conduit 5.

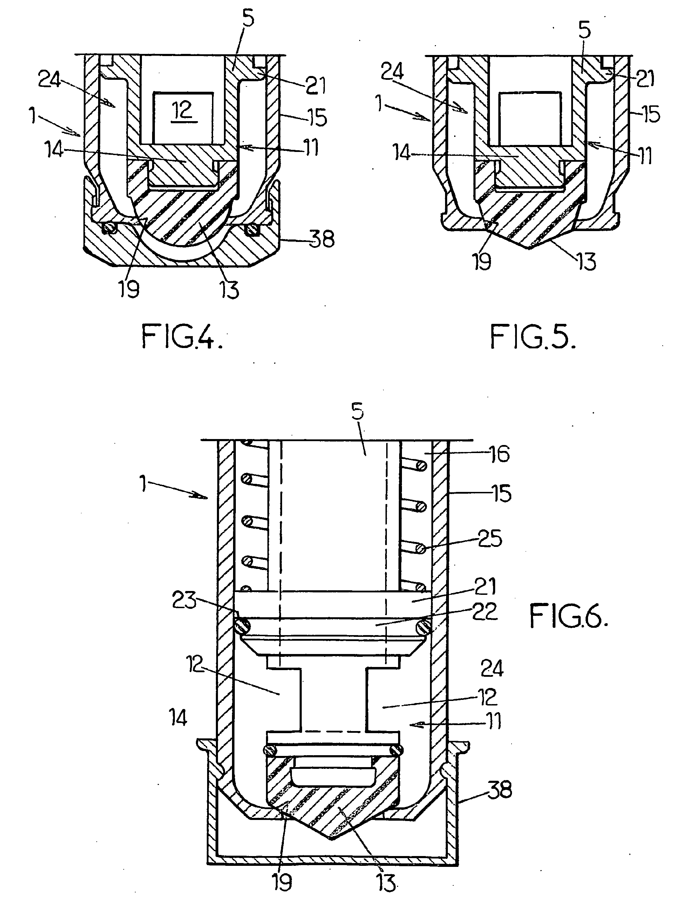

La vanne 1 comprend également un obturateur 13 monté à l'extrémité inférieure 11 du conduit 5. Cet obturateur 13 se présente, suivant un premier mode de réalisation, sous la forme d'un joint hémisphérique en élastomère convenant de préférence à une utilisation alimentaire (par exemple en caoutchouc naturel, ou dans un élastomère de synthèse, par exemple à base de polyuréthane ou de silicone), rapporté, fixé (de préférence par encliquetage, comme représenté sur les figures 4 à 6, mais il pourrait s'agir d'un collage) sur une paroi 14 transversale d'extrémité du conduit 5, adjacente à l'ouverture 12.

En variante, l'obturateur 13 est réalisé dans un matériau métallique dont la surface est de préférence polie pour des raisons d'étanchéité. L'obturateur 13 peut comprendre un joint torique (non représenté) notamment pour une meilleure étanchéité sous pression. Ce joint est alors disposé dans une rainure périphérique à l'obturateur (non représentée) en contact avec la paroi interne du siège de soupape de l'extrémité inférieure 19 lorsque la vanne est en position fermée.

La vanne 1 comprend en outre un manchon 15, monté à l'extérieur du conduit 5, également cylindrique et coaxial à ce dernier, qui présente un diamètre interne supérieur au diamètre externe du conduit 5, en sorte qu'un espace annulaire 16 est ménagé entre le conduit 5 et le manchon 15.

Le manchon 15 présente à une extrémité supérieure un épaulement 17, ainsi qu'une ouverture 18 circulaire ajustée (avec jeu) au diamètre externe du conduit 5. Le manchon 15 présente également une extrémité inférieure 19 opposée conformée en siège de soupape, définissant une ouverture 20, et dont la fonction apparaîtra ci-après.

Comme cela est représenté sur la figure 3, le conduit 5 est muni, à une certaine distance de son extrémité inférieure 11, d'une bague 21 d'étanchéité, de préférence réalisée par usinage dans la masse du conduit 5. Cette bague 21 forme une collerette s'étendant transversalement dans l'espace 16 entre le conduit 5 et le manchon 15, et comporte une rainure 22 périphérique dans laquelle est disposé un joint torique d'étanchéité 23 en contact avec la paroi interne du manchon 15. La bague 21, éventuellement par l'intermédiaire du joint 23, assure conjointement avec l'ouverture 18, le guidage du manchon 15 par rapport au conduit 5 et l'ajustement de l'obturateur 13 sur le siège de soupape 19.

Le manchon 15 délimite conjointement avec le conduit 5, du côté de son extrémité inférieure 11, et plus précisément entre le siège de soupape 19 et la bague d'étanchéité 21, une chambre 24 sensiblement annulaire dans laquelle débouche l'ouverture 12, la chambre 24 étant ainsi remplie de liquide sous pression. Cette pression, mesurée de manière relative, est en pratique inférieure à 10 bars. Elle est de préférence inférieure à 5 bars, et même préférentiellement inférieure à 1 bar.

Comme cela est illustré sur la figure 3, le manchon 15 est monté déplaçable en translation axiale (c'est-à-dire parallèlement à l'axe du conduit 5) par rapport au conduit 5, entre une position haute dite fermée (à gauche sur la figure 3) dans laquelle le siège de soupape 19 coopère de manière étanche avec l'obturateur 13 pour empêcher le liquide de s'écouler depuis la chambre 24, et une position basse dite ouverte (à droite sur la figure 3), localisée sous la position fermée et dans laquelle le siège de soupape 19 est écarté de l'obturateur 13 pour permettre l'écoulement du liquide au travers de l'ouverture 20, via la chambre 24 (flèche P' sur la figure 3).

Afin de faciliter le coulissement du manchon 15 par rapport au conduit 5, le joint d'étanchéité 23 peut être revêtu d'une couche de Téflon® (polytetrafluoroethylène).

Le manchon 15 est sollicité en permanence vers sa position fermée par un ressort 25 de compression, disposé dans l'espace 16 entre le conduit 5 et le manchon 15, et interposé axialement entre la bague d'étanchéité 21 et un épaulement 26 réalisé à l'extrémité supérieure 18 du manchon 15. Cet épaulement 26 est par exemple formé par une bague vissée à l'extrémité supérieure du manchon 15.

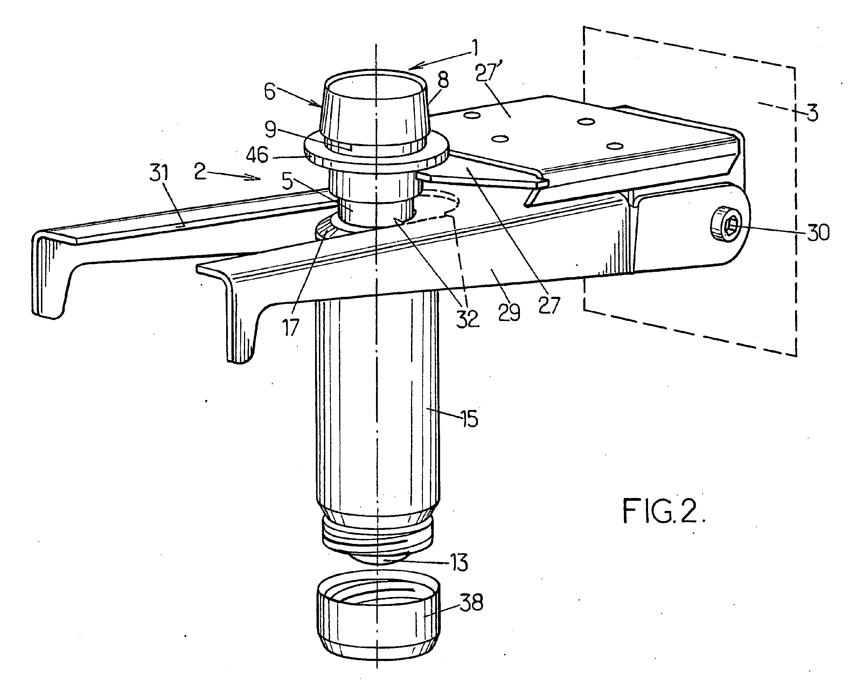

Comme cela est visible sur les figures 2 et 3, et 7 à 9, le dispositif de dosage 2 comprend, outre la vanne 1, des moyens d'actionnement composés d'une partie fixe, appelée platine 27, montée sur le bâti 3 (par exemple par l'intermédiaire, comme cela est représenté sur la figure 2 notamment, d'un socle en queue d'aronde 27', directement vissé dans le bâti 3 et dans lequel vient se glisser la platine 27), et qui peut présenter à une extrémité une découpe 28 propre à recevoir l'embout 6 pour assurer un positionnement précis de la vanne 1 par rapport au bâti 3.

Les moyens d'actionnement comprennent en outre une partie mobile, constituée par un levier 29 d'actionnement monté articulé sur la platine 27 autour d'un axe 30 transversal et qui commande le déplacement du manchon 15.

Plus précisément, le levier 29 présente, à une extrémité opposée à son axe 30 de rotation, une échancrure 31 évasée (figures 2, 8 et 9), qui permet l'introduction de la vanne 1 lors de sa mise en place (amovible). Cette échancrure 31 présente deux rétrécissements 32 qui, une fois la vanne 1 introduite à fond dans l'échancrure 31, prennent appui contre l'épaulement 17 du manchon 15. De la sorte, la manoeuvre du levier 29 depuis une position haute (en trait continu sur la figure 3) vers une position basse (en trait mixte à droite sur la figure 3) provoque le déplacement du manchon 15 depuis sa position fermée, dans laquelle l'écoulement du produit est bloqué, vers sa position ouverte, dans laquelle l'écoulement du produit est permis.

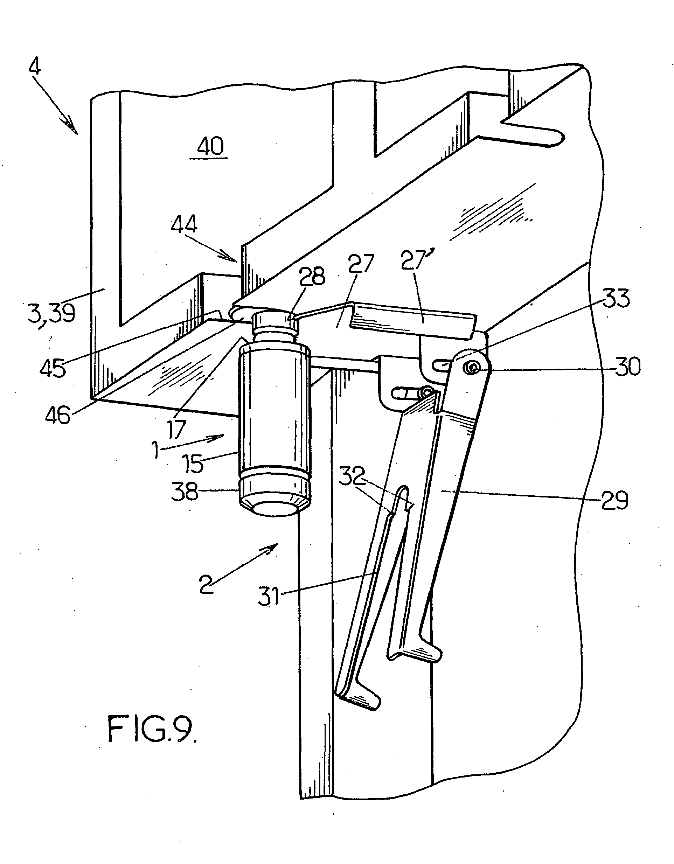

Comme cela est également illustré sur les figures 3 et 9, le levier 29 peut adopter une troisième position, dite « hors service » (en trait mixte, à gauche sur la figure 3), dans laquelle le levier 29 pend librement vers le bas, sensiblement perpendiculairement à la platine 27. Cette position peut être adoptée par le levier 29 malgré la présence dé la vanne 1 grâce à un trou oblong 33 dans lequel l'axe 30 d'articulation du levier 29 est monté, et qui permet le déplacement de celui-ci (de préférence à l'encontre d'un ressort de rappel, non représenté) dans un plan perpendiculaire à l'axe de la vanne 1, dans une position repoussée (en pointillé sur la figure 2) où les rétrécissements 32 sont écartés de l'épaulement 17, et où l'écartement entre les bords de l'échancrure 31 est supérieur au diamètre externe du manchon 15, ce qui permet ainsi un libre pivotement du levier 29 vers le bas sans que celui-ci ne vienne buter contre l'épaulement 17. Dans cette position hors service du levier 29, la mise en place et le retrait de la vanne 1 sont facilités.

Comme cela est représenté en pointillés à droite sur la figure 3, un mécanisme à baïonnette 34 peut être prévu pour assurer le blocage du manchon 15 en position ouverte et ainsi permettre la vidange et le nettoyage de la vanne 1. Ce mécanisme 34 comprend par exemple (comme représenté) un téton 35, monté transversalement sur la paroi interne du manchon 15 dans la partie supérieure de celui-ci, qui coopère avec une rainure oblongue 36 réalisée à la surface externe du conduit 5 dans une partie de l'épaisseur de celui-ci, et qui présente à une extrémité inférieure une portion recourbée 37 pour assurer (moyennant une légère rotation du manchon 15) le blocage du téton 36 en position ouverte du manchon 15.

Un tel mécanisme à baïonnette 34 peut également être prévu pour assurer le blocage du manchon 15 en position fermée (par exemple pour interdire son ouverture intempestive). Dans ce cas, la rainure oblongue 36 sera par exemple pourvue d'un coude à son extrémité supérieure, prévu à angle droit (ou légèrement obtus, par exemple à 95° environ, pour permettre un rattrapage du jeu d'usure entre l'obturateur 13 et le siège 19), dans lequel vient se positionner le téton 35 en position fermée du manchon 15.

Comme cela est visible sur les figures 4, 5 et 6, l'obturateur 13 peut présenter une forme sphérique (figure 4), comme cela est décrit précédemment. Mais, en variante, il peut également présenter une forme tronconique (figure 5), ou même conique (figure 6).

En position fermée, le contact intime entre l'obturateur 13 et le siège de soupape 19, de préférence de forme tronconique, assure une parfaite étanchéité entre le conduit 5 et le manchon 15, ce qui évite toute fuite de produit. Compte tenu de sa forme, sphérique ou conique à son extrémité, l'obturateur 13 permet un écoulement sensiblement laminaire du produit et limite le risque de stagnation d'une quantité importante de celui-ci sur l'obturateur 13 en position fermée du manchon 15. Il en résulte une amélioration significative de l'hygiène par rapport à une vanne classique telle que présentée en introduction. Comme précédemment indiqué, cette étanchéité peut être renforcée par la présence d'un joint torique (non représenté) positionné dans une rainure (non représentée) à la périphérie de l'obturateur.

Le dosage du liquide (en d'autres termes la régulation de son débit) est fonction de la position du manchon 15 par rapport au conduit 5, et par conséquent dépend de la position du levier 29. Lorsque la manoeuvre du levier 29 est manuelle, le dosage du liquide est donc laissé à l'appréciation de l'utilisateur.

Toutefois, il est possible, en variante, de subordonner la manoeuvre du levier 29 à une commande automatique, par exemple hydraulique, pneumatique ou encore électrique.

L'écoulement du liquide s'effectue préférentiellement par combinaison de la gravité et de la pression du liquide dans le conduit 5 (c'est-à-dire dans la chambre 24), mais dans le cas d'un liquide à pression atmosphérique, ou d'un produit pulvérulent, l'écoulement se fait par la seule gravité.

S'agissant des matériaux, le conduit 5, incluant son embout 6, ainsi que le manchon 15, sont de préférence réalisés dans un matériau métallique (par exemple en acier inoxydable de type alimentaire), ou dans un matériau plastique dur de type alimentaire (tel qu'un polycarbonate ou encore un nylon). Ces produits ne sont pas susceptibles d'être dégradés par une éventuelle stagnation.

En outre, et comme illustré sur les figures 2, 4 et 6, la vanne 1 peut être fermée, pendant les opérations de pose ou de dépose du corps de vanne 3, par un bouchon 38 qui vient se visser ou s'encliqueter (comme représenté sur les figures 4 à 6) sur l'extrémité inférieure 19 du manchon 15 pour fermer celui-ci de manière étanche. A ce bouchon 38 peut également être substitué un raccord permettant de relier la vanne 1 à un circuit de dérivation en particulier afin de permettre la réalisation d'une boucle de nettoyage, et tel que cela sera décrit ultérieurement. A des fins d'hygiène, le bouchon 38 peut également être mis à profit pour nettoyer l'extrémité inférieure de la vanne 1, soit par contact prolongé avec une solution de nettoyage de l'obturateur 13, soit par circulation de cette solution dans le bouchon 38. A cet effet, le bouchon 38 peut être percé de trous pour l'injection et l'évacuation de la solution de nettoyage.

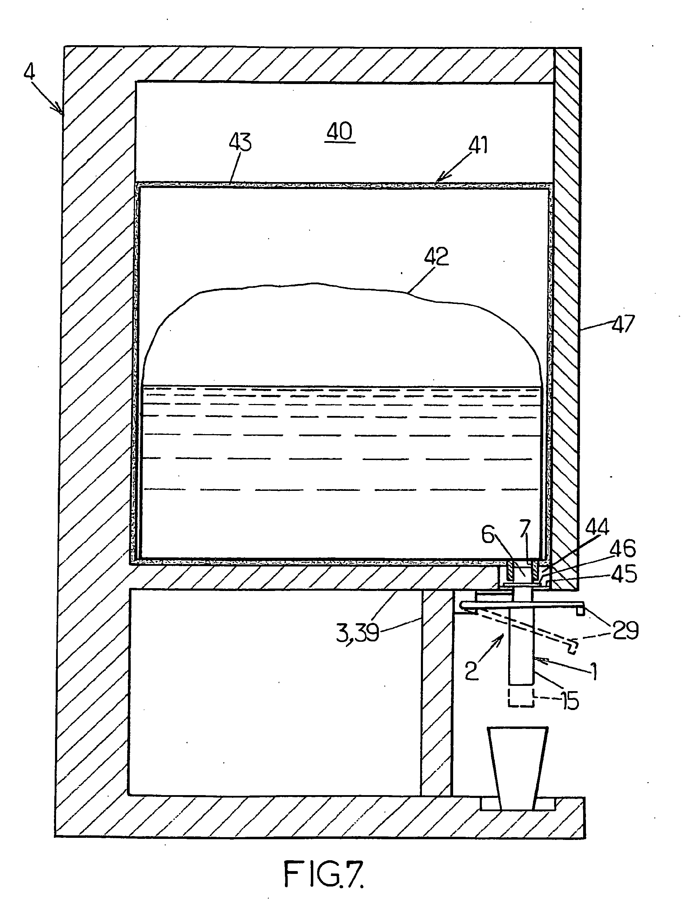

Comme cela est représenté sur les figures 7, 8 et 9, le dispositif de dosage 2 est destiné à être monté sur le bâti 3 d'une machine 4 de distribution du produit.

Cette machine 4 comprend un meuble 39 qui forme le bâti 3 évoqué ci-dessus, ce meuble 39 étant muni d'un compartiment 40 réfrigéré, ainsi qu'un réservoir 41 interchangeable sous la forme d'un bag in box 42 souple et dégonflable, contenant le produit à doser, ce bag in box 42 étant reçu dans une boîte 43 rigide (par exemple en carton) disposée dans le compartiment 40.

Le bag in box 42 est muni d'une tubulure 7 pour l'écoulement du produit, cette tubulure débouchant, vers le bas, lorsque le réservoir 41 est positionné correctement dans le compartiment 40, dans une échancrure 44 ménagée dans le bâti 3 pour la mise en place de la vanne 1.

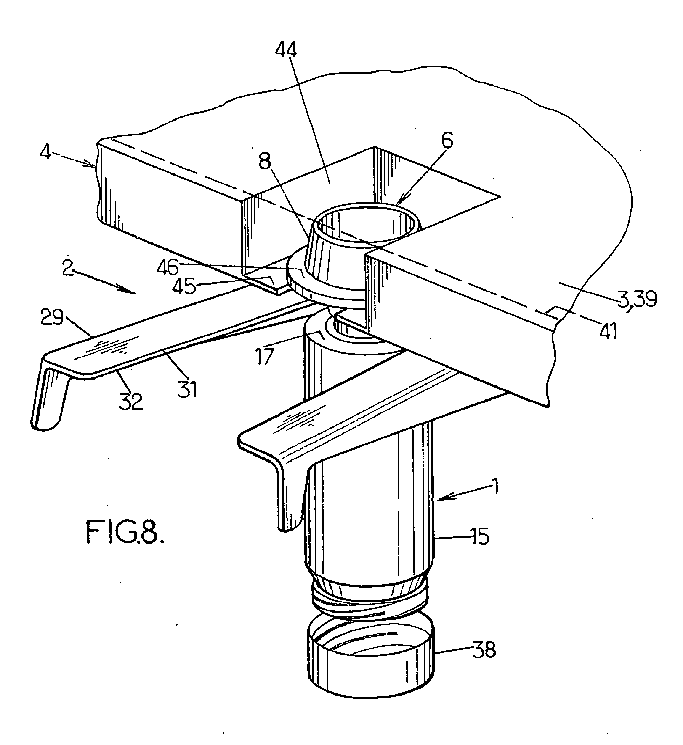

Plus précisément, comme cela est visible sur les figures 8 et 9, le bâti 3 présente, sur un bord inférieur de l'échancrure 44, un lamage 45 sur lequel la vanne 1 repose par l'intermédiaire d'une collerette 46 formée radialement sur l'embout 6.

Parallèlement, la platine 27 est montée sur le meuble 39 au voisinage de l'échancrure 44, en léger retrait par rapport à celle-ci, de telle sorte que la découpe 28 se trouve à l'aplomb de celle-ci et que le levier 29 dépasse du meuble 39 pour permettre sa manoeuvre.

Une fois la platine 27 en place, on pose la vanne 1 comme suit. On commence par la brancher sur le réservoir 41 en raccordant son conduit 5 à la tubulure 7 par l'intermédiaire de l'embout 6. Cette opération est effectuée tubulure 7 vers le haut, afin d'éviter tout écoulement intempestif du produit. Puis on retourne le réservoir 41, que l'on introduit latéralement dans le compartiment 40 en veillant à venir glisser la vanne 1 dans l'échancrure 44, son positionnement précis étant assuré par la découpe 28 dans laquelle vient s'emboîter l'embout 6. La mise en place de la vanne 1 sur le meuble 39 peut être effectué soit en position haute, soit en position hors service du levier 29. Une fois la vanne 1 en position, le compartiment 40 est fermé par une porte 47.

Il est à noter que le froid qui règne dans le compartiment 40 pour la conservation du produit (par exemple lorsqu'il s'agit d'une crème de levure, denrée hautement périssable) se transmet par conduction à la vanne 1 par l'intermédiaire de la tubulure 7 et de l'embout 6.

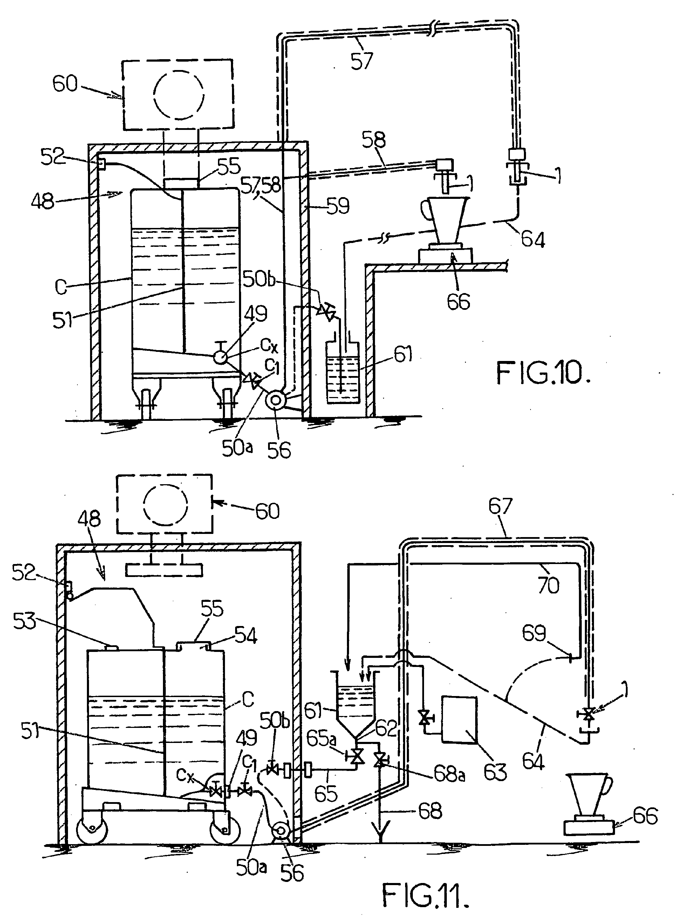

Les figures 10 et 11 représentent schématiquement une installation de distribution de produit intégrant une vanne de dosage de produit selon l'invention.

Il est représenté un conteneur C placé dans une enceinte isolante 48 apte à maintenir le conteneur à une température déterminée. L'installation peut comprendre d'autres moyens isolants alternatifs ou supplémentaires et appropriés pour isoler le conteneur tels qu'une enveloppe ou d'un manteau isolant le conteneur.

Il est bien entendu que, dans les cas où le produit liquide n'a pas besoin d'être maintenu à une certaine température, alors le conteneur C n'est pas placé dans une enceinte isolante 48. Préférentiellement, le conteneur C a une contenance comprise entre 1 et 3000 litres, préférentiellement de 300 litres et est du type à quatre roues de manière à permettre et faciliter son déplacement.

Le conteneur C est apte à contenir un produit liquide du type crème de levure.

Le produit liquide est soutiré par gravité par le biais d'un orifice bas 49 du conteneur C sur lequel est montée une vanne papillon fixe Cₓ. Un tuyau flexible 50, ou tout autre type de conduit permettant la circulation d'un produit liquide, comprenant une vanne papillon C1, de type connue en soi, est également prévu pour servir avantageusement comme raccordement à la vanne papillon fixe Cₓ, le tuyau flexible 50 étant alors dans la positon 50a illustrée en trait plein sur les figures.

Le conteneur C est avantageusement muni d'une sonde de niveau bas 51 notamment une électrode et d'un dispositif 52 apte à émettre un signal d'avertissement ou d'alarme.

Un purgeur ou évent 53 peut également être prévu traversant le haut du conteneur C, l'évent 53 permettant de maintenir le conteneur C à la pression atmosphérique.

Le conteneur C peut comprendre également une ouverture de visite 54 fermée par un couvercle 55 destinée à l'inspection du conteneur C, notamment après le nettoyage du conteneur C.

Avantageusement, l'enceinte isolante 48 définit une chambre froide, à la température préférentielle comprise entre -1°C et +10°C, avantageusement d'environ 4°C, destinée à recevoir un ou plusieurs conteneurs C.

Il est prévu une pompe 56 reliée au conduit flexible 50 issu de l'orifice bas 49 du conteneur C. La pompe 56 est avantageusement placée sous le niveau inférieur du conteneur C, de manière à assurer l'amorçage de la pompe 56 par effet gravitationnel.

Le dispositif 52 apte à émettre un signal d'avertissement ou d'alarme émet, par exemple, au moins un signal lumineux et éventuellement un signal commandant l'arrêt de la pompe 56, lorsque le niveau de produit dans le conteneur C est minimal.

Lors de la mise en route de la pompe 56, les vannes papillon C₁ et Cₓ sont ouvertes et le tuyau flexible 50 dans la position 50a raccorde la vanne Cₓ du conteneur C à la pompe 56.

Le produit liquide issu du conteneur C et de la pompe 56 est amené via un conduit élevé 57 relié à la pompe 56 jusqu'à la vanne de dosage 1 selon l'invention. Avantageusement, le conduit élevé 57 élève le produit liquide jusqu'à un niveau supérieur au toit du conteneur C avant de le ramener à un niveau inférieur mais supérieur au conteneur C. Le conduit élevé 57 peut être prévu traversant le toit de l'enceinte isolante 48.

De manière alternative, un conduit bas 58 relié à la pompe 56 est prévu traversant un des côtés 59 de l'enceinte isolante 48, le conduit bas 58 conduisant à la vanne de dosage selon l'invention 1.

Le conduit élevé 57 et le conduit bas 58 présentent une partie commune dans l'enceinte isolante 48 et une partie à l'extérieur de l'enceinte qui peut être muni d'un isolant thermique de type connu en soi, quand le produit liquide circulant est soumis à des contraintes de température. Il est entendu que l'installation est avantageusement réalisée avec soit uniquement le conduit élevé 57, soit uniquement le conduit bas 58.

Il est ainsi possible de placer la vanne 1 de dosage à un endroit déterminé et à une distance précise de l'enceinte isolante 48 selon que le conduit 57, 58 issu de la pompe 56 traverse une des parois latérales 59 ou le toit de l'enceinte isolante 48. De ce fait, il est possible de tenir compte de l'encombrement du lieu de stockage de l'enceinte 48 ou du conteneur C pour déterminer le lieu de distribution du produit liquide fourni par la vanne 1 de dosage.

De manière optionnelle, quand les produits sont soumis à des contraintes de température pour leur conservation,et afin de refroidir l'enceinte isolante 48 pour qu'elle ait la fonction de chambre froide, des moyens de refroidissement 60, du type groupe frigorifique connu en soi, sont prévus au-dessus de l'enceinte isolante 48.

La pompe 56 est une pompe qui permet de prélever le produit dans le conteneur C et de le refouler soit dans le conduit élevé 57, soit dans le conduit bas 58, la pompe 56 étant apte à assurer l'écoulement du produit dans le conduit soit élevé 57, soit bas 58 préférentiellement à une vitesse comprise entre 0,1 et 1m/s. La pompe 56 peut avoir une vitesse variable de sorte qu'elle est à même d'assurer la circulation d'une solution de nettoyage dans le conduit soit élevé 57, soit bas 58, à une vitesse supérieure à 1m/s, de manière à obtenir un nettoyage efficace dés conduits 57, 58.

Le dispositif de nettoyage des conduits 57, 58 comprend un réservoir 61 d'une solution de nettoyage.

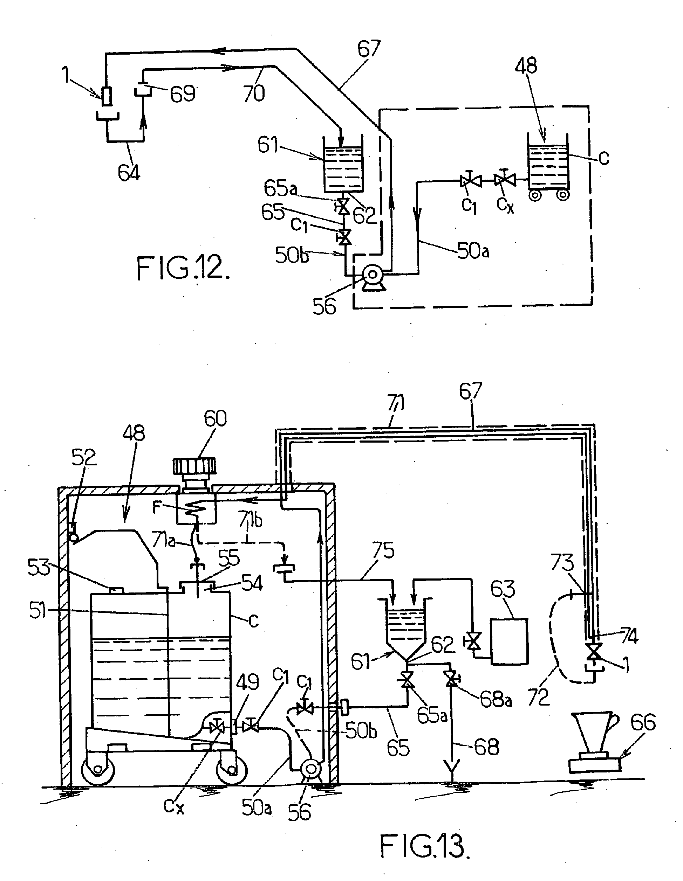

Avantageusement, et tel qu'illustré aux figures 11 et 12, le réservoir 61 contient la solution de nettoyage et pourra être alimenté par de l'eau provenant d'une source 63 d'eau. De manière courante, le réservoir est alimenté manuellement en solution de nettoyage pure, néanmoins il est également possible de prévoir des moyens de distribution automatique de la solution de nettoyage dans le réservoir 61.

La solution de nettoyage peut être préparée dans le réservoir 61 à partir d'un nettoyant désinfectant bactéricide tel que par exemple un alcalin chloré du type Neophoschloro.

Afin de permettre la formation d'une boucle de nettoyage des conduits 57, 58, il est prévu de visser ou d'encliqueter un tuyau 64 de raccordement flexible à l'extrémité inférieure 19 du manchon de la vanne de dosage 1 et de le connecter au réservoir 61.

Selon cette première forme de réalisation d'une installation de dosage d'un produit liquide, les conduits 57 ou 58 ainsi que la vanne 1 qui servent au dosage du produit liquide sont nettoyés grâce à la formation d'une boucle de nettoyage.

Plus précisément, si l'utilisateur souhaite nettoyer le conduit soit élevé 57, soit bas 58, il doit raccorder un tuyau de raccordement 64 à l'extrémité de la vanne de dosage 1 selon l'invention, le tuyau de raccordement 64 étant de longueur telle que son extrémité est apte à plonger dans le réservoir 61 de solution de nettoyage.

La vanne papillon Cₓ de sortie du conteneur C est alors fermée de sorte qu'aucun produit ne peut plus sortir du conteneur C par l'orifice bas 49. Le tuyau flexible 50 comprenant la vanne papillon C1 est alors connecté au réservoir 61 (position 50b illustrée en pointillés à la figure 11) éventuellement par l'intermédiaire d'un autre conduit 65.

La pompe 56 est alors mise en route de manière à ce que de la solution de nettoyage soit aspirée du réservoir 61 par l'intermédiaire du conduit 65 d'évacuation, la solution de nettoyage étant alors refoulée soit dans le conduit élevé 57, soit dans le conduit bas 58.

Il est ainsi obtenu une boucle de nettoyage des conduits 57, 58 dans lesquels circule la solution de nettoyage.

Selon un mode préférentiel, le fonctionnement de la pompe 56 sera actionné par le déplacement des moyens d'actionnement, notamment le levier 29 permettant l'ouverture de la vanne 1 en position ouverte.

Des moyens de réception 66 du produit liquide à doser, préférentiellement de la crème de levure, sont également prévus en sortie de la vanne de dosage 1, ces moyens de réception 66 permettant de mesurer la quantité de produit évacué, soit en pesant cette quantité de produit, soit en mesurant son volume. La quantité de produit à doser peut également être déterminée par un débitmètre prévu en sortie de la vanne 1.

Selon les particularités du mode de réalisation illustré sur la figure 11, un conduit 67, optionnellement revêtu d'un isolant thermique, est prévu entre la pompe 56 et la vanne de dosage 1 selon l'invention.

Comme dans le mode de réalisation correspondant à la figure 10, il est également prévu un tuyau de raccordement 64 entre la vanne de dosage 1 et le réservoir 61 d'une solution de nettoyage.

Un conduit 65 d'évacuation est également prévu raccordé à l'évacuation 62 en bas du réservoir 61 de solution de nettoyage et présentant un raccord sur lequel est apte à se raccorder le tuyau flexible 50b lui-même raccordé à la pompe 56.

Il est également prévu un conduit de déviation 68 sur le conduit 65 en sortie du réservoir 61 de la solution de nettoyage permettant de purger et d'évacuer le contenu du réservoir 61. Afin de permettre le passage de la solution issue du réservoir 61 dans l'un des conduits 65, 68, une vanne 65a, 68a est respectivement prévue sur chacun des conduits 65, 68, permettant le passage de la solution de nettoyage dans l'un des conduits 65, 68.

Le tuyau de raccordement 64 entre la vanne de dosage 1 et le réservoir 61 est soit totalement indépendant du conduit 67 reliant la pompe 56 à la vanne de dosage 1, soit partiellement intégré dans ce conduit 67 à l'aide d'un raccord 69 sur un conduit 70 partiellement intégré dans l'isolant thermique du conduit 67 issu de la pompe 56, soit partiellement limitrophe de ce conduit 67.

Il est ainsi possible de relier le tuyau flexible 64 en sortie de la vanne de dosage 1 soit directement dans le réservoir de solution de nettoyage 61, soit dans un raccord 69 d'un conduit 70 fixe et, de manière optionnelle, partiellement commun avec le conduit 67 de distribution de produit.

Les installations telles que représentées aux figures 10 et 11 peuvent en outre comprendre un ou plusieurs dispositifs de dosage montés en parallèle sur le conduit 57 et/ou 58 ou 67. L'installation selon la figure 11 peut ainsi comprendre plusieurs boucles de nettoyage incluant chacune une vanne de dosage. De manière préférentielle, l'installation comprendra une seule boucle de nettoyage formée par un ou plusieurs tuyaux flexibles 64 ou 70 pour nettoyer les vannes en parallèle, lesdits tuyaux pouvant se réunir avant ou dans le réservoir 61.

La figure 12 représente une vue schématique simplifiée de la formation d'une boucle de nettoyage des conduits à l'aide d'un raccord 69 d'un conduit 70 fixe et partiellement commun au conduit 67 de distribution de produit.

Ainsi, pour former une boucle de nettoyage selon ce mode de réalisation, il convient de fermer la vanne papillon Cₓ en sortie du conteneur C et de placer le tuyau flexible 50 en position 50b, c'est-à-dire de le raccorder au raccord de sortie du conduit d'évacuation 65 (ou alternativement de le raccorder directement à l'évacuation de fond 62 du réservoir de solution de nettoyage 61). La pompe 56 est alors mise en route, un tuyau flexible 64 étant prévu entre la sortie de la vanne 1 et connecté soit directement au réservoir 61 de solution de nettoyage, soit à un conduit 70 fixe débouchant dans le réservoir 61 de solution de nettoyage.

Selon un troisième mode de réalisation d'une installation de dosage d'un produit intégrant une vanne de dosage 1 selon l'invention et telle qu'illustrée à la figure 13, il est prévu un conduit retour 71 dans une zone du conduit 67 de distribution du produit liquide, en amont de la vanne de dosage 1 selon l'invention.

Plus précisément, le conduit 67 de distribution de produit liquide présente un raccordement 74 avant l'extrémité du conduit 67 sur lequel est fixée la vanne de dosage 1 et à partir duquel le conduit 71 retour prend naissance. Il sera décrit ultérieurement un mode de réalisation particulier de ce raccordement 74.

Avantageusement, le conduit retour 71 traverse l'enceinte isolante 48 (quand celle-ci est présente) ainsi que des moyens frigorifiques F, avant de déboucher soit dans le conteneur C, à travers l'ouverture 54 et le couvercle 55 du conteneur C (l'extrémité du conduit retour 71 est alors en position 71a), soit dans un conduit secondaire 75 lui-même débouchant dans le réservoir 61 de solution de nettoyage (l'extrémité du conduit retour 71 est alors en position 71b), le passage de la position 71a à la position 71b, et inversement, se faisant par manipulation manuelle ou de manière automatique. Alternativement, il est possible de prévoir une vanne en sortie des moyens frigorifiques F permettant soit de rejeter le produit circulant dans le conteneur C, soit dans un conduit débouchant dans le réservoir 61 de solution de nettoyage.

Préférentiellement, les moyens frigorifiques F se présentent sous la forme d'un serpentin relié à des éléments Peltier, de type connus en soi.

Ainsi, le refroidissement du produit à doser peut être effectué par circulation en boucle du produit liquide à doser à travers les moyens frigorifiques F dans l'installation.

Il va de soi que de tels moyens frigorifiques F peuvent être omis dans les installations destinées au dosage des produits ne nécessitant pas de conservation à basse température.

Selon un mode préférentiel, le fonctionnement de la pompe sera actionné par le déplacement des moyens d'actionnement, notamment le levier 29 permettant l'ouverture de la vanne 1 en position ouverte.

Un tuyau de raccordement 72 flexible est prévu entre la vanne de dosage 1 selon l'invention et un point de raccordement 73 prévu sur le conduit retour 71.

Selon ce mode de fonctionnement, la pompe 56 peut fonctionner de manière continue ou, afin d'éviter les phénomènes de surchauffe, de manière discontinue, par exemple avec un temps d'arrêt équivalent au temps de fonctionnement. Selon une première alternative, il est formé une boucle dans laquelle circule le produit liquide contenu dans le conteneur C. Dans ce cas de figure, le produit circule dans le conduit 50 en position 50a issu du conteneur C, passe par la pompe 56 puis dans le conduit 67. Le produit est évacué par la vanne de dosage 1 si celle-ci est en position ouverte. Dans le cas contraire, le produit repart dans le conteneur par le conduit retour 71 en position 71a. Il est ainsi formé une boucle circulation du produit contenu dans le conteneur C, et permettant de refroidir le produit à doser lors de son passage dans les moyens frigorifiques F si ceux-ci sont présents.

De manière préférentielle, un capteur de position hors service de la vanne 1, notamment un détecteur de la position du levier 29 dans le trou oblong 33, permettra d'empêcher le fonctionnement de la pompe 56 par exemple lorsque le levier 29 est complètement abaissé pendant un arrêt de l'installation ou lorsque la vanne 1 n'est pas positionnée dans l'installation, notamment lorsqu'elle doit être retirée pour un nettoyage.

Selon une seconde alternative, il est formé une boucle de solution de nettoyage, la vanne Cₓ papillon de sortie du conteneur est alors fermée et le tuyau flexible 50 est connecté en position 50b. Dans ce cas de figure, la solution de nettoyage est évacuée par le conduit 65 prévu en bas du réservoir 61 de solution de nettoyage et relié à la pompe 56, la solution de nettoyage circule alors dans le conduit 67 puis dans le conduit retour 71 ainsi que dans le tuyau de raccordement 72 avant d'être évacuée dans le conduit retour 71. La solution est alors évacuée par le conduit 71 en position 71b qui est raccordé au conduit secondaire 75 lui-même débouchant dans le réservoir 61 de solution de nettoyage. Du fait de la présence d'un tuyau flexible 72 en sortie de la vanne 1, il est obtenu une boucle de nettoyage permettant le nettoyage de la vanne 1.

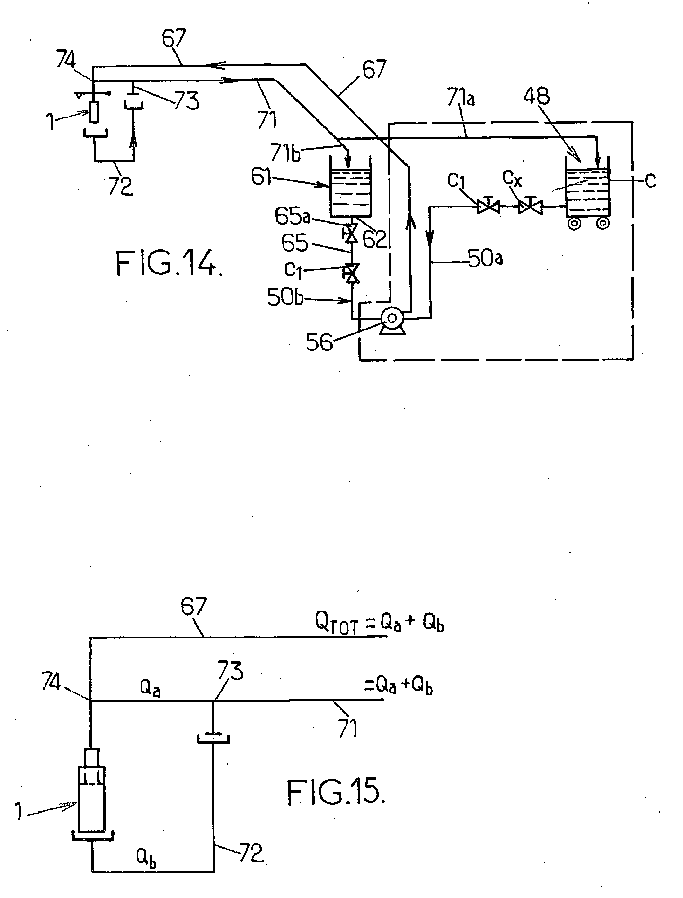

La figure 14 représente de manière plus schématique les différentes boucles de circulation du produit liquide et de la solution de nettoyage réalisées à partir de l'installation illustrée à la figure 13.

La figure 15 illustre les différents débits circulant dans l'installation de distribution du produit de nettoyage incorporant un conduit retour 71 sur lequel est apte à être connecté un tuyau de raccordement 72 connecté à la sortie de la vanne de dosage 1 selon l'invention.

Un premier débit Qtot circule dans le conduit 67 reliant la pompe 56 à la vanne de dosage 1.

Un second conduit retour 71 est alors prévu à partir d'un point de raccordement 74 sur le conduit 67 reliant la pompe 56 à la vanne de dosage 1, le point de raccordement 74 étant situé en amont de la vanne de dosage 1.

Il est prévu qu'un débit Qa circule en sortie du point de raccordement 74 dans le conduit retour 71, un débit Qb circulant par la vanne de dosage 1.

Une telle installation telle que représentée à la figure 13 peut en outre comprendre un ou plusieurs raccordements 74 disposés successivement le long du conduit 67, chaque raccordement 74 débouchant sur une vanne de dosage. Le tuyau 71 en aval du dernier raccordement 74 ramène le produit liquide à doser au conteneur. De manière préférentielle, l'installation est telle que chaque dispositif de dosage peut être nettoyé individuellement comme précédemment expliqué via un tuyau de raccordement flexible 72 et un point de raccordement 73 en aval du raccordement 74.

Une installation comprenant plusieurs vannes de dosage qui peuvent être nettoyés en série dans une boucle de nettoyage est particulièrement avantageuse notamment en ce qu'elle permet de nettoyer en une seule fois les tuyauteries et les vannes avec un même débit de nettoyage.

Le tuyau de raccordement flexible 72 est prévu pour connecter la sortie de la vanne de dosage 1 à un point de raccordement 73 sur le conduit retour 71. Il est alors obtenu après ce point de raccordement un débit Qtot correspondant à la somme de Qa et de Qb. Ainsi, lors de la formation d'une boucle de solution de nettoyage, la solution de nettoyage circule dans les différents conduits et permet de les nettoyer, ainsi que la vanne 1 de dosage.

De manière avantageuse, tout type de moyens de raccordement 15 entre une vanne de dosage 1 selon l'invention et un tuyau de raccordement flexible apte à raccorder la vanne de dosage 1 au réservoir 61 de solution de nettoyage ou à un point de raccordement 69 d'un conduit 70, ou à un point de raccordement 73 d'un conduit 71 est prévu, par exemple des moyens de raccordement par encliquetage de l'extrémité du tuyau dans un manchon entourant l'extrémité de la vanne de dosage 1, par encliquetage, par formation d'une liaison du type à baïonnette, par vissage ou tout autre moyen de type connu en soi.

Avantageusement, les moyens de raccordement se présentent sous la forme d'un manchon apte à s'emmancher sur l'extrémité inférieure 19 du manchon 15 de la vanne de dosage 1 à la place du bouchon 38 tel que précédemment décrit.

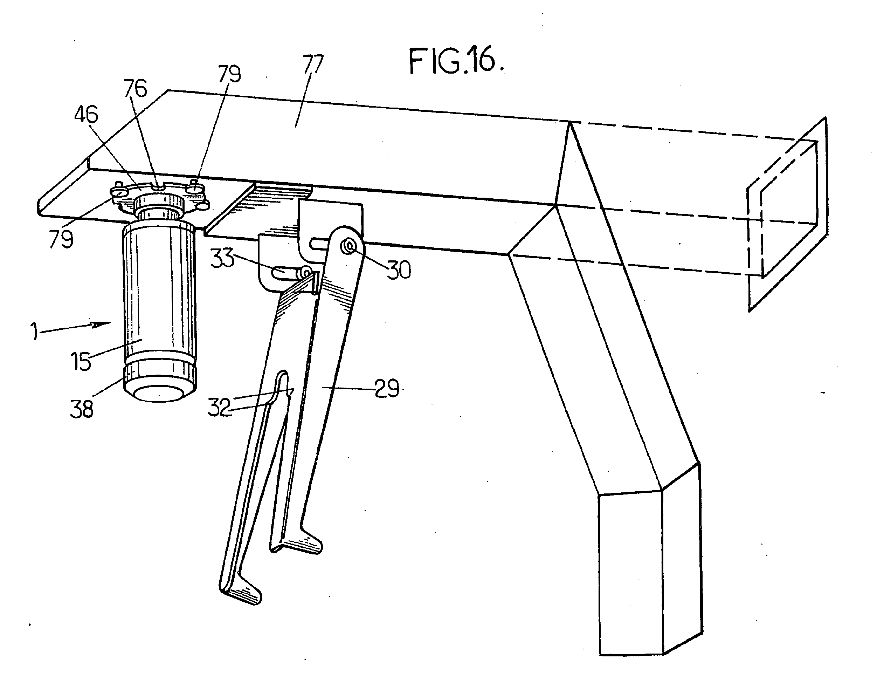

Les figures 16 et 17 sont respectivement des vues en perspective et en coupe d'une forme de réalisation d'une vanne selon l'invention présentant une collerette 46 avec une pluralité d'encoches 76.

Selon ce mode de réalisation, la vanne 1 est solidarisée avec un bras support 77 comportant un orifice 78 dans lequel est apte à s'engager l'embout 6 de la vanne 1. Une pluralité de têtes de vis 79 est prévue en saillie sur la surface inférieure du bras support 77. Avantageusement, il est prévu autant d'encoches 76 sur la collerette 46 que de têtes de vis 79. Ainsi, afin de solidariser la vanne 1 sur la bras support 77, il convient d'enfoncer l'embout 6 dans l'orifice 78 du bras support 77, puis de mettre en vis-à-vis les têtes de vis 79 avec les encoches 76 de manière à ce que la collerette 46 puisse être plaquée contre la surface inférieure du bras support 77. Il est alors nécessaire de pivoter la vanne 1 sur son propre axe pour que les encoches 76 ne soient plus en vis-à-vis des têtes de vis 79. La collerette se trouve alors bloquée dans l'espace entre la surface inférieure du bras support 77 et la tête de vis 79. Un bouton ressort 80, de type connu en soi, est avantageusement prévu de manière à bloquer la rotation sur son propre axe de la vanne 1, une fois que la collerette 46 est plaquée contre la surface inférieure du bras support 77, que les encoches 76 ne sont plus en vis-à-vis des têtes de vis 79, et qu'une encoche 76 est bloquée contre le bouton ressort 80. Il convient ensuite d'appuyer sur le bouton ressort 80 pour débloquer la collerette 46 et permettre sa rotation autour de son propre axe et ainsi le désengagement de la vanne 1 du bras support 77.

Le raccordement 74 entre le conduit d'alimentation en produit 67 et le conduit retour 71 se présente avantageusement sous la forme d'une pièce monobloc 82 dans laquelle se loge l'embout 6 de la vanne 1 avec un orifice axial 83 dans lequel débouche le conduit d'alimentation en produit 67 ainsi que le conduit retour 71.

L'invention n'est pas limitée aux modes de réalisation qui viennent d'être présentés. Diverses variantes peuvent être imaginées.

En particulier, la vanne pourrait être actionnée de manière directe, c'est-à-dire sans recourir à un levier. Il suffirait par exemple, selon l'utilisation que l'on souhaite en faire, de la munir de moyens de préhension (par exemple des tétons en saillie radiale) permettant de faire coulisser directement le manchon 15 par rapport au conduit 5.

## Revendications

1. Vanne (1) de dosage d'un produit liquide ou pulvérulent, qui comprend :
- un conduit (5) fixe d'alimentation du produit, qui présente une extrémité supérieure (6) conformée en embout pour son raccordement à une tubulure (7) d'amenée du produit, et une extrémité inférieure (11) de distribution du produit, ce conduit (5) définissant du côté de son extrémité inférieure (11) une ouverture (12) pour le passage du produit ;
- un obturateur (13) disposé à l'extrémité inférieure (11) du conduit (5) ;
- un manchon (15) coaxial, monté à l'extérieur du conduit (5), qui présente une extrémité inférieure (19) conformée en siège de soupape, ce manchon (15) délimitant conjointement avec le conduit (5), du côté de son extrémité inférieure (11), une chambre (24) dans laquelle débouche ladite ouverture (12), ledit manchon (15) étant déplaçable en translation par rapport au conduit (5) entre une position dite fermée dans laquelle le siège de soupape (19) coopère de manière étanche avec l'obturateur (13), et une position dite ouverte dans laquelle le siège de soupape (19) est écarté de l'obturateur (13) pour permettre l'écoulement du produit, ladite chambre (24) étant délimitée par le siège de soupape (19) d'une part, et par une bague d'étanchéité (21) d'autre part, interposée entre le conduit (5) et le manchon (15), pour toutes positions du manchon (15) par rapport au conduit (5) situées entre ladite position fermée et ladite position ouverte.

2. Vanne (1) selon la revendication 1, dans laquelle le siège de soupape (19) est tronconique.

3. Vanne (1) selon la revendication 1 ou 2, dans laquelle l'obturateur (13) est de forme hémisphérique.

4. Vanne (1) selon la revendication 1 ou 2, dans laquelle l'obturateur (13) est de forme conique ou tronconique.

5. Vanne (1) selon l'une des revendications 1 à 4, dans laquelle l'obturateur (13) est réalisé dans un matériau élastomère.

6. Vanne (1) selon l'une des revendications 1 à 5, dans laquelle un ressort de rappel (25) sollicite en permanence le manchon (15) vers sa position fermée.

7. Vanne (1) selon l'une des revendications 1 à 6, qui comprend un mécanisme à baïonnette (34) assurant le blocage du manchon (15) en position ouverte et/ou fermée.

8. Vanne (1) selon la revendication 7, dans laquelle ledit mécanisme à baïonnette comprend un téton qui coopère avec une rainure coudée.

9. Dispositif (2) de dosage d'un produit liquide ou pulvérulent, qui comprend :
- une vanne (1) selon l'une des revendications 1 à 8,
- des moyens (27, 29) d'actionnement de ladite vanne (1).

10. Dispositif (2) selon la revendication 9, dans lequel lesdits moyens d'actionnement (27, 29) de ladite vanne (1) comprennent :
- une platine (27) fixe, et
- un levier (29) d'actionnement, monté articulé sur la platine (27) et qui coopère avec le manchon (15) pour en commander le déplacement par rapport au conduit (5).

11. Dispositif (2) selon la revendication 10, dans lequel la platine (27) est munie de moyens (28) de positionnement de la vanne (1).

12. Dispositif selon la revendication 11, dans lequel le levier (29) présente une échancrure (31) évasée permettant l'introduction du conduit (5) pour le positionnement de l'embout (6) par rapport à la platine (27).

13. Dispositif (2) selon la revendication 12, dans lequel ledit levier (29) peut adopter une position dite hors service dans laquelle il est écarté du manchon (15).

14. Machine (4) de distribution d'un produit liquide ou pulvérulent, qui comprend :
- un meuble (39) muni d'un compartiment (40),
- un réservoir (41) interchangeable, disposé dans ledit compartiment (40) et contenant ledit produit, ce réservoir (41) étant muni d'une tubulure (7) pour l'écoulement du produit, et
- un dispositif (2) de dosage selon l'une des revendications 9 à 13,
machine (4) dans laquelle la vanne (1) est branchée sur ledit réservoir (41), son conduit (5) étant raccordé à la tubulure (7) par l'intermédiaire de son embout (6),
tandis que les moyens d'actionnement (27, 29) sont montés sur le meuble (39).

15. Machine (4) de distribution d'un produit liquide ou pulvérulent, qui comprend :
- un meuble (39) muni d'un compartiment (40) et ayant une échancrure (44) pour l'introduction d'une vanne (1),
- un réservoir (41) interchangeable, disposé dans ledit compartiment (40) et contenant ledit produit, ce réservoir (41) étant muni d'une tubulure (7) pour l'écoulement du produit, et
- un dispositif (2) de dosage selon la revendication 11 ou 12,
machine (4) dans laquelle la platine (27) est montée sur le meuble (39) au voisinage de l'échancrure (44),
et dans laquelle la vanne (1) est mise en place sur le meuble (39) en étant positionnée dans l'échancrure (44) et branchée sur ledit réservoir (41), son conduit (5) étant raccordé à la tubulure (7) par l'intermédiaire de son embout (6).

16. Installation de distribution d'un produit liquide comportant :
- un conteneur (C) contenant ledit produit liquide ;
- des moyens de distribution d'un produit liquide (50, 57, 58, 67, 71, 71a) reliant le conteneur (C) à une vanne de dosage selon l'une des revendications 1 à 8 ;
- une pompe (56) permettant le prélèvement du produit liquide du conteneur (C) et la circulation dudit produit liquide dans les moyens de distribution de produit liquide (50, 57,67,71,71a);
- un dispositif de dosage selon l'une des revendications 9 à 13.

17. Installation de dosage selon la revendication 16, **caractérisée en ce qu'**elle comprend un réservoir d'une solution de nettoyage (61) apte à nettoyer lesdits moyens de distribution d'un liquide.

18. Installation de dosage selon la revendication 16 ou 17, **caractérisée en ce que** lesdits moyens de distribution de produit liquide comprennent un conduit retour (71) partant en amont de la vanne de dosage (1) et débouchant soit dans le conteneur (C), soit dans un conduit secondaire (75), ledit conduit (75) débouchant préférentiellement dans ledit réservoir (61) de solution de nettoyage.

19. Installation de dosage selon l'une des revendications 16 à 18, **caractérisée en ce qu'**elle comprend un tuyau (64, 72) de raccordement flexible apte à raccorder ladite vanne (1) au réservoir de nettoyage (61).

20. Installation de dosage selon la revendication précédente, **caractérisée en ce que** ledit tuyau (64, 72) de raccordement flexible débouche soit dans ledit réservoir (61) de solution de nettoyage, soit dans un point de raccordement (73) prévu sur ledit conduit retour (71), soit dans un conduit (70) débouchant dans ledit réservoir (61) de solution de nettoyage.

21. Procédé de dosage de crème de levure liquide de boulangerie par utilisation d'une vanne de dosage selon l'une des revendications 1 à 8, ou d'un dispositif de dosage selon l'une des revendications 9 à 13, ou d'une machine de distribution selon l'une des revendications 14 ou 15, ou une installation de distribution selon l'une des revendications 16 à 20.

## Patentansprüche

1. Ventil (1) zum Dosieren eines flüssigen oder pulverförmigen Produkts, umfassend:
- eine feste Leitung (5) zum Zuführen des Produkts, welche ein als Anschluss gebildetes oberes Ende (6) aufweist, um mit einer Zulaufleitung (7) für das Produkt verbunden zu werden, sowie ein unteres Ende (11) zum Abgeben des Produkts, wobei die Leitung (5) an der Seite ihres unteren Endes (11) eine Öffnung (12) für den Durchgang des Produkts definiert;
- einen an dem unteren Ende (11) der Leitung (5) angeordneten Verschlusskörper (13);
- eine an der Außenseite der Leitung (5) angebrachte koaxiale Hülse (15), welche ein als Ventilsitz gebildetes unteres Ende (19) aufweist, wobei die Hülse (15) gemeinsam mit der Leitung (5) an der Seite ihres unteren Endes (11) eine Kammer (24) begrenzt, in welche die Öffnung (12) mündet, wobei die Hülse (15) bezüglich der Leitung (5) in Translation zwischen einer geschlossenen Position, in welcher der Ventilsitz (19) dichtend mit dem Verschlusskörper (13) zusammenwirkt, und einer offenen Position beweglich ist, in welcher der Ventilsitz (19) von dem Verschlusskörper (13) getrennt ist, um das Ausströmen des Produkts zu erlauben, wobei die Kammer (24) zum einen Teil von dem Ventilsitz (19) und zum anderen Teil von einem Dichtungsring (21) begrenzt ist, welcher zwischen der Leitung (5) und der Hülse (15) eingefügt ist, für alle Positionen der Hülse (15) bezüglich der Leitung (5), welche sich zwischen der geschlossenen Position und der offenen Position befinden.

2. Ventil (1) nach Anspruch 1, wobei der Ventilsitz (19) kegelstumpfförmig ist.

3. Ventil (1) nach Anspruch 1 oder 2, wobei der Verschlusskörper (13) halbkugelförmig ist.

4. Ventil (1) nach Anspruch 1 oder 2, wobei der Verschlusskörper (13) kegelförmig oder kegelstumpfförmig ist.

5. Ventil (1) nach einem der Ansprüche 1 bis 4, wobei der Verschlusskörper (13) aus einem Elastomermaterial hergestellt ist.

6. Ventil (1) nach einem der Ansprüche 1 bis 5, wobei eine Rückstellfeder (25) die Hülse dauerhaft in Richtung ihrer geschlossenen Position vorbelastet.

7. Ventil (1) nach einem der Ansprüche 1 bis 6, umfassend einen Bajonett-Mechanismus (34), welcher das Blockieren der Hülse (15) in der offenen oder/und geschlossenen Position sicherstellt.

8. Ventil (1) nach Anspruch 7, wobei der Bajonett-Mechanismus einen Stift umfasst, welcher mit einer gebogenen Nut zusammenwirkt.

9. Vorrichtung (2) zum Dosieren eines flüssigen oder pulverförmigen Produkts, umfassend:
- ein Ventil (1) nach einem der Ansprüche 1 bis 8,
- Mittel (27, 29) zum Betätigen des Ventils (1).

10. Vorrichtung (2) nach Anspruch 9, wobei die Mittel zum Betätigen (27, 29) des Ventils (1) umfassen:
- eine feste Platine (27), und
- einen Betätigungshebel (29), welcher an der Platine (27) angelenkt ist und welcher mit der Hülse (15) zum Steuern der Bewegung bezüglich der Leitung (5) zusammenwirkt.

11. Vorrichtung (2) nach Anspruch 10, wobei die Platine (27) mit Mitteln (28) zum Positionieren des Ventils (1) bereitgestellt ist.

12. Vorrichtung nach Anspruch 11, wobei der Hebel (29) eine aufgeweitete Einbuchtung (31) umfasst, welche das Einführen der Leitung (5) zum Positionieren des Anschlusses (6) bezüglich der Platine (27) erlaubt.

13. Vorrichtung (2) nach Anspruch 12, wobei der Hebel (29) eine Außer-Betrieb-Position einnehmen kann, in welcher er von der Hülse (15) getrennt ist.

14. Maschine (4) zum Abgeben eines flüssigen oder pulverförmigen Produkts, umfassend:
- ein Gehäuse (39), welches mit einer Kammer (40) bereitgestellt ist,
- einen austauschbaren Tank (41), welcher in der Kammer (40) angeordnet ist und das Produkt enthält, wobei der Tank (41) mit einem Rohransatz (7) zum Ausströmen des Produkts bereitgestellt ist, und
- eine Vorrichtung (2) zum Dosieren nach einem der Ansprüche 9 bis 13,
wobei das Ventil (1) der Maschine (4) an dem Tank (41) angeschlossen ist, wobei ihre Leitung (5) mit dem Rohransatz (7) mittels des Anschlusses (6) verbunden ist,
während die Mittel zum Betätigen (27, 29) an dem Gehäuse (39) angebracht sind.

15. Maschine (4) zum Abgeben eines flüssigen oder pulverförmigen Produkts, umfassend:
- ein Gehäuse (39), welches mit einer Kammer (40) bereitgestellt ist und eine Aussparung (44) zum Einführen eines Ventils (1) aufweist,
- einen austauschbaren Tank (41), welcher in der Kammer (40) angeordnet ist und das Produkt enthält, wobei der Tank (41) mit einem Rohransatz (7) zum Ausströmen des Produkts bereitgestellt ist, und
- eine Vorrichtung (2) zum Dosieren nach einem der Ansprüche 11 oder 12,
wobei die Platine (27) der Maschine (4) an dem Gehäuse (39) in der Nähe der Aussparung (44) angebracht ist,
und wobei das Ventil (1) an dem Gehäuse (39) installiert ist, indem es in der Aussparung (44) positioniert und an dem Tank (41) angeschlossen ist, wobei ihre Leitung (5) mit dem Rohransatz (7) mittels des Anschlusses (6) verbunden ist.

16. Anlage zum Abgeben eines flüssigen Produkts, umfassend:
- einen Behälter (C), welcher das flüssige Produkt enthält;
- Mittel zum Abgeben eines flüssigen Produkts (50, 57, 58, 67, 71, 71 a), welche den Behälter (C) mit einem Ventil zum Dosieren nach einem der Ansprüche 1 bis 8 verbinden;
- eine Pumpe (56), welche die Entnahme des flüssigen Produkts aus dem Behälter (C) und das Strömen des flüssigen Produkts in die Mittel zum Abgeben des flüssigen Produkts (50, 57, 67, 71, 71 a) erlaubt;
- eine Vorrichtung zum Dosieren nach einem der Ansprüche 9 bis 13.

17. Anlage zum Dosieren nach Anspruch 16, **dadurch gekennzeichnet, dass** sie einen Tank für eine Reinigungslösung (61) umfasst, welche dazu geeignet ist, die Mittel zum Abgeben einer Flüssigkeit zu reinigen.

18. Anlage zum Dosieren nach einem der Ansprüche 16 oder 17, **dadurch gekennzeichnet, dass** die Mittel zum Abgeben des flüssigen Produkts eine Rückführleitung (71) umfassen, welche vor dem Ventil zum Dosieren (1) abzweigt und entweder in den Behälter (C) oder in eine zweite Leitung (75) mündet, wobei die Leitung (75) vorzugsweise in den Tank (61) für die Reinigungslösung mündet.

19. Anlage zum Dosieren nach einem der Ansprüche 16 bis 18, **dadurch gekennzeichnet, dass** sie ein flexibles Verbindungsrohr (64, 72) umfasst, welches in der Lage ist, das Ventil (1) mit dem Reinigungstank (61) zu verbinden.

20. Anlage zum Dosieren nach dem vorhergehenden Anspruch, **dadurch gekennzeichnet, dass** das flexible Verbindungsrohr (64, 72) entweder in den Tank (61) für die Reinigungslösung oder in einen an der Rückführleitung (71) vorgesehenen Verbindungspunkt (73) oder in eine Leitung (70) mündet, welche in den Tank (61) für die Reinigungslösung mündet.

21. Verfahren zum Dosieren einer flüssigen Backhefe-Creme durch Verwendung eines Ventils nach einem der Ansprüche 1 bis 8 oder einer Vorrichtung zum Dosieren nach einem der Ansprüche 9 bis 13 oder einer Maschine zum Abgeben nach einem der Ansprüche 14 oder 15 oder einer Anlage zum Abgeben nach einem der Ansprüche 16 bis 20.

## Claims

1. Valve (1) for metering a liquid or powdered product, which comprises:
- a fixed conduit (5) for supplying the product, having a top end (6) configured as an end-piece so as to connect it to tubing (7) delivering the product and a bottom end (11) for dispensing the product, this conduit (5) defining an aperture (12) at its bottom end (11) providing a passage for the product;
- a closure member (13) disposed at the bottom end (11) of the conduit (5);
- a coaxial sleeve (15) mounted on the outside of the conduit (5) having a bottom end (19) configured as a valve seat, this sleeve (15) in conjunction with the conduit (5) bounding a chamber (24) at its bottom end (11) into which said aperture (12) opens, said sleeve (15) being displaceable in translation relative to the conduit (5) between a closed position in which the valve seat (19) co-operates with the closure member (13) in a sealing arrangement and an open position in which the valve seat (19) is moved away from the closure member (13) to allow the product to flow, said chamber (24) being bounded by the valve seat (19) on the one hand and by a sealing ring (21) on the other hand, interposed between the conduit (5) and the sleeve (15) for all positions of the sleeve (15) relative to the conduit (5) between said closed position and said open position.

2. Valve (1) as claimed in claim 1, wherein the valve seat (19) is frustoconical.

3. Valve (1) as claimed in claim 1 or 2, wherein the closure member (13) is of a hemispherical shape.

4. Valve (1) as claimed in claim 1 or 2, wherein the closure member (13) is of a conical or frustoconical shape.

5. Valve (1) as claimed in one of claims 1 to 4, wherein the closure member (13) is made from an elastomeric material.

6. Valve (1) as claimed in one of claims 1 to 5, wherein a return spring (25) permanently biases the sleeve (15) towards its closed position.

7. Valve (1) as claimed in one of claims 1 to 6, which comprises a bayonet mechanism (34) locking the sleeve (15) in the open and/or closed position.

8. Valve (1) as claimed in claim 7, wherein said bayonet mechanism comprises a lug which co-operates with an angled groove.

9. Device (2) for metering a liquid or powdered product, which comprises:
- a valve (1) as claimed in one of claims 1 to 8,
- means (27, 29) for actuating said valve (1).

10. Device (2) as claimed in claim 9, wherein said means (27, 29) for actuating said valve (1) comprise:
- a fixed plate (27) and
- an actuating lever (29) mounted on the plate (27) in an articulated arrangement and which co-operates with the sleeve (15) to control the displacement thereof relative to the conduit (5).

11. Device (2) as claimed in claim 10, wherein the plate (27) is provided with means (28) for positioning the valve (1).

12. Device as claimed in claim 11, wherein the lever (29) has a flared notch (31) enabling the conduit (5) to be introduced in order to position the end-piece (6) relative to the plate (27).

13. Device (2) as claimed in claim 12, wherein said lever (29) is able to assume a non-operational position in which it is moved away from the sleeve (15).

14. Machine (4) for dispensing a liquid or powdered product, which comprises:
- a cabinet (39) provided with a compartment (40),
- an interchangeable reservoir (41) disposed in said compartment (40) and containing said product, this reservoir (41) being provided with tubing (7) through which the product flows, and
- a metering device (2) as claimed in one of claims 9 to 13,
in which machine (4) the valve (1) is connected to said reservoir (41), its conduit (5) being connected to the tubing (7) via its end-piece (6),
whereas the actuating means (27, 29) are mounted on the cabinet (39).

15. Machine (4) for dispensing a liquid or powdered product, which comprises:
- a cabinet (39) provided with a compartment (40) and having a notch (44) for introducing a valve (1),
- an interchangeable reservoir (41) disposed in said compartment (40) and containing said product, this reservoir (41) being provided with tubing (7) through which the product flows, and
- a metering device (2) as claimed in claim 11 or 12,
in which machine (4) the plate (27) is mounted on the cabinet (39) in the vicinity of the notch (44),
and wherein the valve (1) is fitted on the cabinet (39), being positioned in the notch (44) and connected to said reservoir (41), its conduit (5) being connected to the tubing (7) via its end-piece (6).

16. Installation for dispensing a liquid product, comprising:
- a container (C) containing said liquid product;
- means (50, 57, 58, 67, 71, 71a) for dispensing a liquid product connecting the container (C) to a metering valve as claimed in one of claims 1 to 8;
- a pump (56) enabling liquid product to be drawn off from the container (C) and enabling said liquid product to be circulated in the means (50, 57, 67, 71, 71a) for dispensing liquid product;
- a metering device as claimed in one of claims 9 to 13.

17. Metering installation as claimed in claim 16, **characterised in that** it comprises a reservoir (16) of a cleaning solution suitable for cleaning said means for dispensing a liquid product.

18. Metering installation as claimed in claim 16 or 17, **characterised in that** said means for dispensing liquid product comprise a return conduit (17) starting upstream of the metering valve (1) and opening into either the container (C) or into a secondary conduit (75), said conduit (75) preferably opening into said reservoir (61) of cleaning solution.

19. Metering installation as claimed in one of claims 16 to 18, **characterised in that** it comprises a flexible connecting tube (64, 72) capable of connecting said valve (1) to the cleaning reservoir (61).

20. Metering installation as claimed in the preceding claim, **characterised in that** said flexible connecting tube (64, 72) opens into either said reservoir (61) of cleaning solution or into a connecting point (73) provided on said return conduit (71) or into a conduit (70) opening into said reservoir (61) of cleaning solution.

21. Method of metering liquid baker's yeast cream using a metering valve as claimed in one of claims 1 to 8 or a metering device as claimed in one of claims 9 to 13 or a dispensing machine as claimed in one of claims 14 or 15 or a dispensing installation as claimed in one of claims 16 to 20.
